# EUROPÄISCHE PATENTSCHRIFT

(11) **EP 0 403 034 B1**
(45) Veröffentlichungstag und Bekanntmachung des Hinweises auf die Patenterteilung: **22.02.1995**
(21) Anmeldenummer: 90250052.9
(22) Anmeldetag: 15.02.1990
(51) Int. Cl.: G01N 15/02, G01N 1/20

(54) **Verfahren und Vorrichtung zur Analyse der Partikelgrössenverteilung in einem flüssigen Produktstrom**
Method and arrangement for analysing the size distribution of particles in a fluid production stream
Procédé et dispositif pour l'analyse de la répartition de tailles de particules dans un écoulement fluide de production

(30) Priorität: 16.02.1989 DE 3904957
(43) Veröffentlichungstag der Anmeldung: 19.12.1990
(73) Patentinhaber: Salzgitter Anlagenbau Zweigniederlassung der Preussag Anlagenbau GmbH, 38239 Salzgitter (DE)
(72) Erfinder: Brandis, Udo, D-3324 Haverlah (DE); Klose, Reinhold, Dr., D-3344 Cramme (DE)
(74) Vertreter: Lüdtke, Frank

(56) Entgegenhaltungen:
- WO-A-88/02855
- DE-A- 2 929 430
- US-A- 4 625 570
- APPLIED OPTICS, February 1972, Vol.11, No. 2, S. 265 - 268, J. Cornillault: "Particle size analyzer."

## Beschreibung

Die Erfindung betrifft ein Verfahren und eine Vorrichtung zur Analyse der Partikelgrößenverteilung von in einem flüssigen Produktstrom im wesentlichen homogenen suspendierten Partikeln, das beispielsweise bei einer in kurzen Zeitabständen erfolgenden Überwachung des Produktstromes angewendet werden kann.

Die Erfindung ist anwendbar für Suspensionen, die beispielsweise durch Naßmahlung erzeugt werden, für Mischungen, die als Suspension vorliegen oder für Suspensionen, deren Partikelgrößenverteilung sich während eines längeren Förderweges verändert. Über die Partikelgrößenverteilung soll insbesondere die Qualität der Suspension überwacht werden, so daß Einflußnahmen auf einen Herstellungsprozeß oder zur Absonderung von vorgegebenen Werten nicht entsprechenden Suspensionsteilen rechtzeitig möglich sind.

In Applied Optics, Februar 1972, VOL. 11 No. 2, S. 265 bis 268 berichtet J. Cornillault über ein Verfahren zur Bestimmung der Partikelgrößenverteilung mittels einer optischen Meßeinrichtung. Hier wird aus einem pulverförmigen Stoff und einer geeigneten Flüssigkeit in einem Gefäß durch Rühren und Ultraschallwirkung eine homogene Dispersion hergestellt und mittels einer Schlauchpumpe im Kreislauf durch die Meßküvette der Meßeinrichtung geleitet, in der mittels eines Laserstrahls, einer rotierenden Schlitzmaske und eines Fotodetektors eine den einzelnen Meßbereichen der verschiedenen Partikelgrößen entsprechende Intensität ermittelt wird. Ferner wird hier angeregt, das Verfahren zur Kontrolle einer Produktionslinie einzusetzen und die für die Messung zu verwendende Dispersion automatisch herzustellen, sowie zwischen den Messungen das Meßgerät mit einer reinen Flüssigkeit zu spülen. Es werden jedoch keine Hinweise gegeben, wie eine solche Messung automatisch und on-line durchgeführt werden kann. Da aus trockenen Substanzen zunächst eine Dispersion gebildet wird, scheint das bekannte Verfahren nicht ohne weiteres für Suspensionen anwendbar zu sein, die meist hoch konzentriert sind und daher in einer optische Meßeinrichtung im Durchfluß nicht ohne weiteres zu überprüfen sind. Cornillault gibt für das Meßverfahren eine Genauigkeit von 2% an, die für den vorgesehenen Einsatz der Erfindung nicht ausreicht. Auch der meßbare Korngrößenbereich von 1,5 »m bis über 100 »m genügt für die erfindungsgemäße Anwendung nicht.

In dem vorgenannten Artikel wird nicht gesagt, wie eine Probe aus einem Produktstrom zum Beispiel einer Suspension entnommen werden kann.

In DE 29 29 430 C2 wird vorgeschlagen, eine Probe aus dem Strömungsquerschnitt einer von einer Suspension durchströmten senkrechten Rohrleitung zu entnehmen, die Probe nötigenfalls zu verdünnen, anschließend zu filtrieren und die ausgefilterten Teilchen mittels einer rechnergesteuerten lichtmikroskopischen Apparatur in Verbindung mit einem rechnergesteuerten Bildanalysensystem hinsichtlich der Partikelgrößenverteilung zu analysieren. Dieses System ist jedoch zum einen sehr zeitaufwendig und zum anderen nicht sehr zuverlässig, da es vorkommen kann, daß mehrere Partikel ineinander haften und daher falsche Meßwerte ermittelt werden.

US-A-4 625 570 zeigt einen mechanischen Probennehmer, der in einen Produktstrom eingebracht werden kann, wobei die Produktentnahme erfolgt, ohne daß der Produktstrom aus seinem Behälter entweichen kann. Bei dieser Ausführung ist nicht sichergestellt, daß die Probe aus einem bestimmten Ort des Produktstromes entnommen wird, weil bei der Bewegung des Probennehmers auch Anteile des Produktstromes aus dem Raumbereich in die Probe fallen, die im Fahrweg des Probennehmers liegen.

Aufgabe der Erfindung ist es, ein Verfahren und eine Vorrichtung zu schaffen, mit deren Hilfe eine Analyse der Partikelgrößenverteilung einer Suspension on-line am Weg der Suspension und in möglichst kurzen Zeitabständen mit geringer Fehlerwahrscheinlichkeit bei hoher Genauigkeit durchgeführt wird, wobei die Probe nur aus einem bestimmten Raumbereich des Produktstromes entnommen werden soll.

Diese Aufgabe wird durch das Verfahren gemäß Anspruch 1 und die Vorrichtung gemäß Anspruch 2 gelöst.

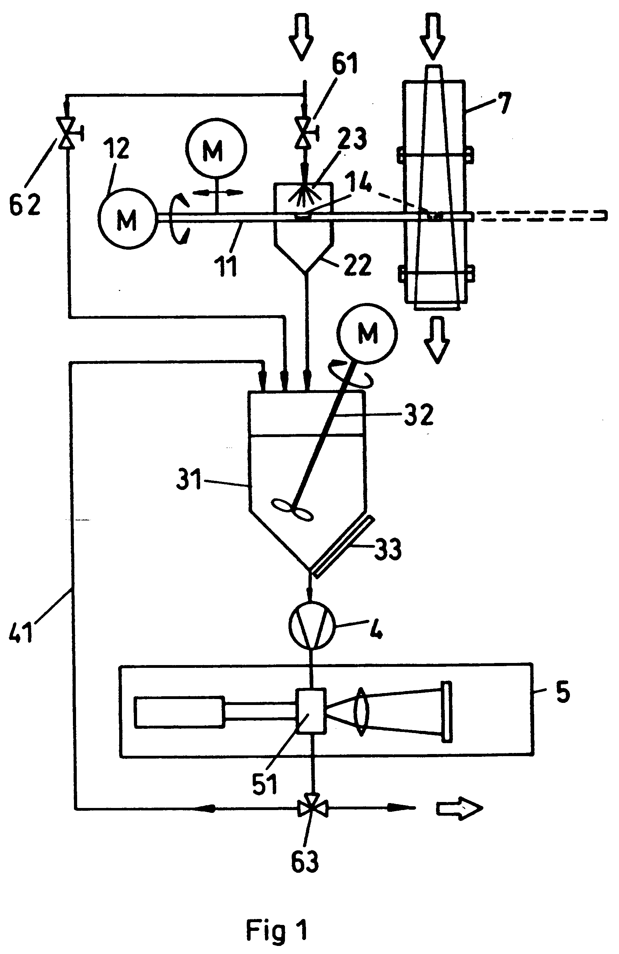

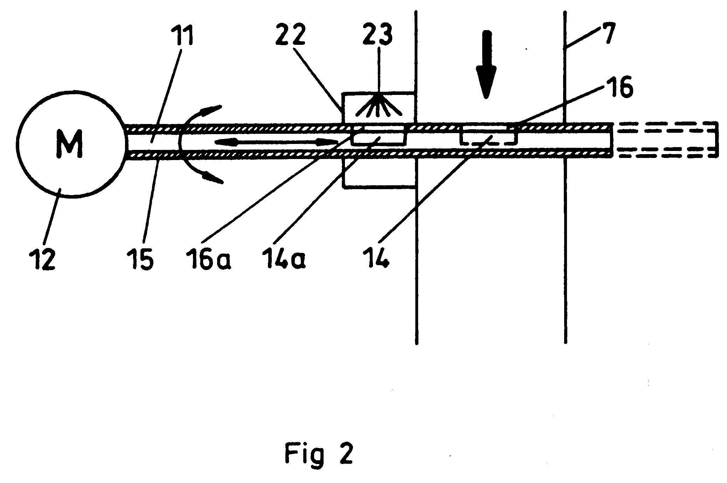

Das erfindungsgemäße Verfahren zur Analyse der Partikelgrößenverteilung und die zu seiner Durchführung vorgesehene Vorrichtung werden anhand von bevorzugten, schematisch gezeichneten Ausführungsbeispielen beschrieben, wobei Fig. 1 ein Beispiel für eine gesamte Vorrichtung vereinfacht darstellt und Fig. 2 einen bei der Vorrichtung nach Fig. 1 verwendbaren Probennehmer zeigt.

Nach dem Verfahren gemäß Anspruch 1 erfolgt zunächst eine Nullmessung mit der Meßflüssigkeit zur Kalibrierung der optischen Analyseeinheit. Hierzu wird die Meßflüssigkeit zum Beispiel Wasser oder eine andere Flüssigkeit, die die Feststoffe der Suspension nicht beeinflußt, über ein Ventil 62 in einen Behälter 31, in dem später die Meßsuspension hergestellt wird, geleitet und wird mittels der Schlauchpumpe 4 über die Zirkulationsleitung 41 durch die Meßküvette 51 des optischen Analysegerätes im Kreislauf gepumpt. Als optische Analyseeinheit 5 wird ein Laserbeugungsspektrometer bevorzugt. An dieses ist ein nicht dargestellter Rechner angeschlossen, der gemessene Werte auswertet, speichert und ausdruckt.

Es erfolgt nun die Probenentnahme aus dem Produktstrom. Hierzu wird eine repräsentative Probe von stets gleichem Probenvolumen aus der Mitte eines unter standardisierten Bedingungen fließenden Produktstromes mechanisch entnommen. Der Probennehmer 1 ist als eine horizontale axial verschiebbare und drehbare Stange 11 ausgebildet, die einen Aufnahmeraum 14 besitzt. Der Antrieb des Probennehmers 1 erfolgt durch elektrische, hydraulische oder pneumatische Motoren 12, 13 in einer Weise, bei der der Aufnahmeraum 14 der Stange 11 erst in einer vorbestimmten Aufnahmestellung vorzugsweise in der Mitte des Rohres 7, in dem die Suspension fließt, in eine Stellung zur Aufnahme der Probe gebracht wird. Dies kann dadurch geschehen, daß die Stange 11 mit nach unten gekehrtem Aufnahmeraum eingeschoben wird und erst in der Aufnahmestellung so gedreht wird, daß sich eine Probenmenge in dem Aufnahmeraum 14 sammelt. Ist der Aufnahmeraum 14 aus dem Rohr 7 zurückgezogen, wird er in einem Spülbehälter 22 entleert. Dabei wird die Probe mittels eines Teiles der Meßflüssigkeit in den Behälter für die Meßsuspension gespült. Hierzu sind am Spülbehälter 22 Waschdüsen 23 angeordnet, denen reine Meßflüssigkeit über das Ventil 61 zugeführt wird. Die Stange 11 kann dabei so verdreht werden, daß das Herausspülen der Probe erleichtert wird.

In dem Behälter 31 wird die Meßsuspension aus der Probe und aus weiterer über das Ventil 62 zugeführter Meßflüssigkeit hergestellt. Nachdem die Meßsuspension mittels eines Rührers 32 und eines Ultraschallerzeugers 33 ausreichend homogenisiert ist, wird sie durch die Zirkulationsleitung 41 gepumpt, wobei in dem Spektrometer 5 eine Kontrolle der optischen Konzentration erfolgt und gegebenenfalls durch Zugabe von weiterer Meßflüssigkeit eine Abstimmung mit dem Auflösungsvermögen der optischen Analyseeinheit erreicht wird. Ist die optische Konzentration zu hoch, so wird weitere Meßflüssigkeit zugegeben und gegebenenfalls ein Teil der Meßsuspension abgelassen, wenn die Gesamtmenge zu groß werden sollte. Ist dagegen die optische Konzentration zu niedrig, so kann eine weitere Probe aus dem Produktstrom der Meßsuspension zugeführt werden. Die jeweils eingesetzten Mengen werden vom Rechner registriert. Entspricht die optische Konzentration dem vorgegebenen Auflösungsvermögen, so erfolgt jetzt die Messung der Partikelgrößen, während die Meßsuspension weiter durch die Meßküvette 51 und die Zirkulationsleitung 41 mittels der Schlauchpumpe 4 gepumpt wird. Dabei ist die Anzahl aufeinander folgenden Messungen mit der Meßsuspension aus einer Probe und die Dauer einer jeden Messung wählbar. Nach Abschluß der Messungen wird das System über das Ventil 63 entleert. Anschließend erfolgt eine Spülung der Meßeinrichtung mit der Meßflüssigkeit.

Der nicht dargestellte Rechner ermittelt nicht nur die Meßwerte des Spektrometers und stellt sie in geeigneter Form zusammen, sondern steuert den gesamten Meßzyklus, so daß dieser in einer optimierten, reproduzierbaren Form ohne eine Fehlermöglichkeit, die beispielsweise bei einer Handbedienung vorhanden wäre, durchgeführt wird. Über den Rechner werden die Bewegungen des Probennehmers 1, die Ventile 61, 62, 63, die Homogenisiereinrichtungen 32, 33 und die Schlauchpumpe 4 während des Ablaufes eines Meßzyklus gesteuert, der mit einer Nullmessung beginnt, die Probennahme umfaßt, die Aufbereitung der Meßsuspension mit der Kontrolle der optischen Konzentration sowie den anschließenden Meßvorgang für die Partikelgrößenverteilung einschließt und mit dem Ablassen der Meßsuspension und der Spülung der Meßeinrichtung mit der Meßflüssigkeit endet. Infolge des automatischen Ablaufes des Meßzyklus kann dieser auf 5 Minuten reduziert werden. Innerhalb dieses Zyklus können auch mehrere Proben nacheinander zur Bildung einer Meßsuspension entnommen werden, da der Zeitraum einer Probennahme nur wenige Sekunden beträgt.

Durch das verwendete Laserbeugungsspektrometer kann ein breiter Partikelgrößenbereich von 0,18 »m bis etwa 2000 »m untersucht werden. Der Meßbereich wird vorzugsweise in wenigstens 32 Korngrößenklassen unterteilt. Die Streuung der Meßwerte liegt unter ±0,2% bei mehrfach wiederholten Messungen, was einer sehr großen Genauigkeit entspricht.

Der in Fig. 1 dargestellte Probennehmer 1 wird zur Entnahme von Proben aus einer Suspension, die in einem Rohr 7 im Freistrahl, d. h. ohne Druck oder mit laminarer Strömung vertikal abwärts fließt, bevorzugt. Das Rohrende 7 bildet dabei einen Teil des Probennehmers, um sicherzustellen, daß der Fluß der Suspensionen unter stets gleichbleibenden, standardisierten Bedingungen erfolgt. Die Entnahme der Probe aus etwa der Mitte des Rohres 7 ergibt eine repräsentative Probe, die von etwaigen Einflüssen der Strömung an der Rohrwand auf die Partikelgrößen frei ist. Vorzugsweise wird der gesamte Produktstrom ununterbrochen durch das Rohr 7 geleitet. Ein Bypass für den Produktstrom kann vorgesehen werden für den Fall, daß vorübergehend auf Probennahmen verzichtet werden soll oder Arbeiten an dem Rohr beziehungsweise dem Probennehmer vorzunehmen sind.

Fig. 2 zeigt einen abgewandelten Probennehmer, bei dem eine Suspension unter Druck in dem Rohr 7 fließt. Auch hier ist eine Stange 11 mit einem Aufnahmeraum 14 axial verschiebbar. Die Stange 11 ist von einem Außenrohr 15 umgeben, das sich vorzugsweise über den ganzen Durchmesser des Rohres 7 erstreckt. Das Außenrohr 15 besitzt wenigstens eine Öffnung 16, die mit dem Aufnahmeraum 14 in Deckung gebracht werden kann, um eine Probe in dem Aufnahmeraum 14 aufzunehmen. Wird die Stange 11 zurückgezogen, schließt das Außenrohr 15 den Aufnahmeraum 14 ab. In dem Spülbehälter 22 wird der Aufnahmeraum wieder geöffnet. Die Zeichnung zeigt, daß bei einem gleichzeitigen Zurückziehen von Stange 11 und Außenrohr 15 die Öffnung 16a mit dem Aufnahmeraum 14a so ausgerichtet wird, daß durch Waschdüsen 23 die Probe aus dem Aufnahmeraum in der Stellung 14a herausgespült werden kann. Das Außenrohr ist in jedem Falle drehbar, um den Aufnahmeraum 14 abschließen zu können. Es kann außerdem in verdrehter Stellung gemeinsam mit der Stange 11 zurückgezogen werden. In dem Spülbehälter 22 können Außenrohr und Stange gemeinsam so verdreht werden, daß die Probe seitlich oder nach unten ausgespült werden kann. Es ist jedoch auch möglich, bei dieser Ausführung das Außenrohr 15 nur drehbar anzuordnen und mit zwei Öffnungen 16, 16a zu versehen. In diesem Fall ist es zweckmäßig, das Außenrohr 15 fest in dem Rohr 7 zu montieren. Außenrohr und Stange werden in nicht dargestellter Weise durch einen Motor 12 bewegt, der von dem nicht dargestellten Rechner betätigt wird. Aus dem Spülbehälter fließt, wie in Fig. 1 gezeigt, die Probe in den Behälter für die Meßsuspension. Insbesondere bei der Ausführung nach Fig. 2 ist es vorteilhaft, den Spülbehälter 22 möglichst unmittelbar am Rohr 7 anzuordnen.

Mit der erfindungsgemäßen Vorrichtung wurden Analysen bei z. B. Kohle-Wasser-Suspensionen mit mittlerer Korngröße unter 100 »m und PVC- und Polyamidsuspensionen mit mittlerer Teilchengröße von etwa 50 bis 100 »m und mit einem Anteil des Feststoffes von über 45% durchgeführt. Das jeweils konstante Probenvolumen betrug etwa zwischen 0,5 und 1 cm³, und wurde mit 5 bis 10 dm³ Meßflüssigkeit zur Meßsuspension verdünnt. Zur Kontrolle der Apparatur wurden Analysen mehrfach wiederholt. Bei 6 Messungen von derselben Probe beziehungsweise derselben Meßsuspension, in der Polyamid-Partikel zwischen etwa 0,2 »m und 115 »m enthalten waren, wurde eine Streuung der Meßwerte von ±0,16% um den Mittelwert der Korngröße festgestellt. Auch bei mehrfacher Wiederholung ganzer Meßzyklen einschließlich der Probennahme aus z. B. einer im Kreislauf durch das Rohr 7 gepumpten, homogenen Suspension war die Streuung nicht größer als ±0,16%. Dies bedeutet, daß die erfindungsgemäße Probennahme und die Aufbereitung der Probe das Analysenergebnis praktisch nicht beeinflußt, da diese Vorgänge in reproduzierbarer Weise fehlerfrei und äußerst genau erfolgen. Damit ermöglicht das erfindungsgemäße Verfahren, einen Suspensionsstrom on-line und in kurzen Intervallen zuverlässig automatisch zu überwachen.

## Patentansprüche

1. Verfahren zur Analyse der Partikelgrößenverteilung von in einem flüssigen Produktstrom im wesentlichen homogenen suspendierten Partikeln bei einer in kurzen Zeitabständen erfolgenden Überwachung des Produktstromes mittels
a) Probenentnahme aus dem Produktstrom
b) Aufbereiten der Probe mit einer Meßflüssigkeit zu einer Meßsuspension in einem Behälter (31)
c) Zirkulation (41) der Meßsuspension durch eine optische Analyseeinheit (5) in Form eines Laserbeugungsspektrometers mit einer Küvette und zurück in den Behälter (31)
d) Ermittlung der Partikelgrößen durch die optische Analyseeinheit (5) und Auswertung der Meßwerte durch einen Rechner
e) Spülen des Behälters (31) und der optischen Analyseeinheit (5) mit der Meßflüssigkeit
dadurch gekennzeichnet, daß
f) vor der Zirkulation (41) der Meßsuspension durch die optische Analyseeinheit (5) eine Nullmessung mit der Meßflüssigkeit zur Kalibrierung der optischen Analyseeinheit (5) erfolgt,
g) die Probenentnahme als eine repräsentative Probe von stets gleichem Probenvolumen aus der Mitte eines unter standardisierten Bedingungen fließenden Produktstrom mechanisch erfolgt, indem ein Probennehmer (1) durch die Rohrwand eines den Produktstrom unter Druck und standardisierten Bedingungen führenden Rohres (7) im wesentichen quer zum Produktstrom eingeführt wird, wobei der Probennehmer eine einen Aufnahmeraum (14) aufweisende Stange (11) umfaßt, die von einem dicht anliegenden drehbaren Außenrohr (15) umgeben ist, welches wenigstens eine Öffnung (16) in der Größe des Aufnahmeraumes (14) hat und die Stange (11) mit durch das Außenrohr (15) verschlossenen Aufnahmeraum (14) in die Aufnahmestellung verschoben wird, worauf die Öffnung (16) gedreht wird, so daß die Probe den Aufnahmeraum (14) ausfüllt und die Stange (11) danach in eine Entleerungsstellung in einen Spülbehälter (22) mit durch das Außenrohr verschlossenem Aufnahmeraum zurückgezogen und dieser dort zur Deckung mit einer Öffnung (16a) des Außenrohres (15) gebracht wird,
h) die Probe in den Spülbehälter (22) entleert wird,
i) die Probe zur Aufbereitung mittels eines Teiles der Meßflüssigkeit vom Spülbehälter (22) in den Behälter für die Meßsuspension (31) gespült wird,
k) die Meßsuspension aus der Probe und der Meßflüssigkeit durch Zugabe von Meßflüssigkeit bzw. weiteren Proben soweit verdünnt oder verdichtet wird, daß die optische Konzentration der Meßsuspension auf das Auflösungsverfahren der optischen Analyseeinheit (5) abgestimmt wird,
l) daß zur Zirkulation der Meßsuspension die Meßsuspension durch die Küvette (51) des Laserbeugungsspektrometers und durch den Behälter für die Meßsuspension gepumpt wird (4, 41), wobei die Anzahl aufeinander folgender Messungen mit der Meßsuspension aus einer Probe und ihre Dauer wählbar sind, und
m) ein Rechner auch die Einzelvorgänge bei der Nullmessung, bei der Probenentnahme, bei der Aufbereitung und Kontrolle der Meßsuspension und bei der Messung steuert.

2. Vorrichtung zur Analyse der Partikelgrößenverteilung von in einem flüssigen Produktstrom homogen suspendierten Partikeln bei einer in kurzen Zeitabständen erfolgenden Überwachung des Produktstroms insbesondere zur Durchführung des Verfahrens nach Anspruch 1 umfassend
einen Behälter (31) zur Herstellung der Meßsuspension mit Einrichtungen (32, 33) zum Mischen und Homogenisieren,
eine optische Analyseeinheit in Form eines Laserbeugungsspektrometers (5) mit einer Küvette (51),
eine Zirkulationsleitung (41) mit einer Schlauchpumpe (4) zur Zirkulation der Meßsuspension zwischen dem Behälter (31) und der Küvette (51) des Spektrometers (5),
dadurch gekennzeichnet, daß die Vorrichtung weiter
einen Probennehmer (1) umfaßt, der eine durch die Rohrwand eines den Produktstrom führenden Rohres (7) einschiebbare und zurückziehbare und um ihre Längsachse drehbare Stange (11) aufweist, wobei die Stange (11) einen Aufnahmeraum (14) für die zu entnehmende Probe besitzt und die Stange (11) von einem dicht anliegenden drehbaren Außenrohr (15) umgeben ist, welches wenigstens eine Öffnung (16) in der Größe des Aufnahmeraumes (14) hat und das Außenrohr (15) den Aufnahmeraum (14) zunächst verschließt, während die Stange (11) in das Rohr (7) geschoben wird, worauf anschließend die Öffnung (16) so gedreht ist, daß die Probe den Aufnahmeraum (14) ausfüllen kann und die Stange (11) danach in eine Entleerungsstellung in einen Spülbehälter (22) mit durch das Außenrohr (15) verschlossenem Aufnahmeraum zurückgezogen ist und dieser dort zur Deckung mit einer Öffnung (16a) des Außenrohres (15) gebracht ist,
daß Motore (12) zum Einschieben, Zurückziehen und Drehen der Stange (11) und zum Drehen des Außenrohres (15) vorhanden sind,
daß der Spül-Behälter (22) mit dem Behälter (31) für die Meßsuspension verbunden ist,
daß Waschdüsen (23) zum Herausspülen der Probe aus dem Aufnahmeraum (14) in den Spül-Behälter (22) vorhanden sind, und daß zur Steuerung der Bewegungen des Probennehmers (11), des Entleerens des Aufnahmeraumes (14) sowie zur Auswertung, Speicherung und zum Ausdruck der Meßwerte ein Rechner vorhanden ist.

## Claims

1. Method of analyzing the particle size distribution of particles, which are substantially homogeneously suspended in a liquid product stream, while monitoring the product stream at short intervals of time by
a) taking samples from the product stream;
b) processing the sample with a measuring fluid to form a measuring suspension in a container (31);
c) circulating in line (41) the measuring suspension through an optical analyzing unit (5), which is in the form of a laser diffraction spectrometer with a chamber, and back into the container (31);
d) determining the particle sizes by the optical analyzing unit (5) and evaluating the measurement values by a computer;
e) rinsing the container (31) and the optical analysing unit (5) with the measuring fluid;
characterised in that
f) prior to the circulation (41) of the measuring suspension through the optical analyzing unit (5), a zero measurement is effected with the measuring fluid to calibrate the optical analyzing unit (5);
g) the sample-taking is mechanically effected as a representative sample of a constantly identical sample volume from the centre of a product stream, flowing under standardized conditions, when a sampler (1) is introduced through the wall of a pipe (7), which guides the product stream under pressure and standardised conditions, substantially transversely relative to the product stream, the sampler including a rod (11), which has a receiving chamber (14) and is surrounded by a closely abutting, rotatable external pipe (15), which has at least one aperture (16) corresponding to the size of the receiving chamber (14), and the rod (11), which is provided with a receiving chamber (14) closed by the external pipe (15), being displaced into the receiving position, whereupon the aperture (16) is rotated so that the sample fills the receiving chamber (14) and the rod (11) is then withdrawn into an emptying position into a rinsing vessel (22) having a receiving chamber closed by the external pipe, and said receiving chamber is brought to coincide there with an aperture (16a) in the external pipe (15);
h) the sample is emptied into the rinsing vessel (22);
i) the sample for processing is rinsed by means of a portion of the measuring fluid from the rinsing container (22) into the container for the measuring suspension (31);
k) the measuring suspension from the sample and the measuring fluid is thinned or thickened by the addition of measuring fluid or additional samples, respectively, to such an extent that the optical concentration of the measuring suspension is adapted to the resolution process of the optical analyzing unit (5);
l) to circulate the measuring suspension, the measuring suspension is pumped through the chamber (51) of the laser diffraction spectrometer and through the container for the measuring suspension (4, 41), the number of successive measurements with the measuring suspension from a sample and their duration being selectable; and
m) a computer also controls the individual processes during the zero measurement, during the sample-taking, during the preparation and checking of the measuring suspension and during the measurement.

2. Apparatus for analysing the particle size distribution of particles, which are homogeneously suspended in a liquid product stream, while monitoring the product stream at short intervals of time, more especially for accomplishing the method according to claim 1, including
a container (31) for producing the measuring suspension provided with means (32, 33) for mixing and homogenising purposes;
an optical analysing unit in the form of a laser diffraction spectrometer (5) provided with a chamber (51);
a circulation line (41) provided with a stricture pump (4) for circulating the measuring suspension between the container (31) and the chamber (51) of the spectrometer (5);
characterised in that
the apparatus also includes a sampler (1) having a rod (11), which can be inserted and withdrawn through the wall of a pipe (7) guiding the product stream and is rotatable about its longitudinal axis, the rod (11) having a receiving chamber (14) for the sample to be taken, and the rod (11) being surrounded by a closely abutting, rotatable external pipe (15), which has at least one aperture (16) corresponding to the size of the receiving chamber (14), and the external pipe (15) initially closes the receiving chamber (14), while the rod (11) is pushed into the pipe (7), whereupon the aperture (16) is subsequently so rotated that the sample can fill the receiving chamber (14), and the rod is then withdrawn into an emptying position in a rinsing vessel (22) having a receiving chamber closed by the external pipe (15), and said receiving chamber is brought to coincide there with an aperture (16a) in the external pipe (15);
in that motors (12) are provided to insert, withdraw and rotate the rod (11) and to rotate the external pipe (15);
in that the rinsing vessel (22) is connected to the container (31) for the measuring suspension;
in that washing nozzles (23) are provided in the rinsing vessel (22) for rinsing the sample from the receiving chamber (14);
and in that a computer is provided to control the movements of the sampler (1), to empty the receiving chamber (14) and to evaluate, store and express the measurement values.

## Revendications

1. Procédé pour analyser la répartition de grosseur de particules en suspension sensiblement homogène dans un courant de produit liquide, avec une surveillance dudit courant de produit à intervalles rapprochés, à l'aide
a) d'un prélèvement du courant de produit,
b) de la préparation de l'échantillon avec un liquide de mesure pour former une suspension de mesure dans un récipient (31),
c) de la circulation (41) de la suspension de mesure à travers une unité d'analyse optique (5) en forme de spectromètre à diffraction laser pourvu d'une cuve, avec retour dans le récipient (31),
d) du calcul des grosseurs de particules par l'unité d'analyse optique (5), et de l'évaluation des valeurs de mesure par un ordinateur, et
e) du rinçage du récipient (31) et de l'unité d'analyse optique (5) à l'aide du liquide de mesure,
caractérisé
f) en ce que, avant la circulation (41) de la suspension de mesure a travers l'unité d'analyse optique (5), une mesure nulle est effectuée avec le liquide de mesure en vue du calibrage de l'unité d'analyse optique (5),
g) en ce que le prélèvement se fait mécaniquement sous la forme d'un échantillon représentatif d'un volume toujours égal, à partir du milieu d'un courant de produit s'écoulant dans des conditions normalisées, un échantillonneur (1) étant introduit sensiblement transversalement par rapport au courant de produit à travers la paroi tubulaire d'un tube (7) qui amène le courant de produit sous pression dans des conditions normalisées, étant précisé que l'échantillonneur comprend une barre (11) contenant un espace de réception (14) et entourée par un tube extérieur rotatif (15), appliqué de façon étanche,qui a au moins une ouverture (16) de la taille de l'espace de réception (14), et que la barre (11) contenant l'espace de réception (14) obturé par le tube extérieur (15) est déplacée vers la position de réception, après quoi l'ouverture (16) est tournée, de telle sorte que l'échantillon remplit l'espace de réception (14) et la barre (11) est ensuite ramenée dans une position d'évacuation dans un récipient de rinçage (22) contenant un espace de réception obturé par le tube extérieur, lequel espace de réception vient coïncider à cet endroit avec une ouverture (16a) du tube extérieur (15),
h) en ce que l'échantillon est évacué vers le récipient de rinçage (22),
i) en ce que l'échantillon est rincé, en vue d'une préparation à l'aide d'une partie du liquide de mesure du récipient de rinçage (22), vers le récipient prévu pour la suspension de mesure (31),
k) en ce que la suspension de mesure formée de l'échantillon et du liquide de mesure est diluée ou concentrée grâce à l'adjonction de liquide de mesure ou d'autres échantillons jusqu'à ce que la concentration optique de la suspension de mesure soit adaptée au procédé de résolution de l'unité d'analyse optique (5),
l) en ce que pour la circulation de la suspension de mesure, celle-ci est pompée (4, 41) à travers la cuve (51) du spectromètre à diffraction laser et le récipient prévu pour la suspension de mesure, le nombre de mesures successives effectuées avec la suspension de mesure formée à partir d'un échantillon, et leur durée pouvant être choisis, et
m) en ce qu'un ordinateur commande aussi les opérations individuelles lors de la mesure nulle, du prélèvement, de la préparation et du contrôle de la suspension, et de la mesure.

2. Dispositif pour analyser la répartition de grosseur de particules en suspension homogène dans un courant de produit liquide, avec une surveillance dudit courant de produit à intervalles rapprochés, en particulier pour la mise en oeuvre du procédé selon la revendication 1, comprenant
un récipient (31) pour la fabrication de la suspension de mesure, pourvu de dispositifs (32, 33) pour mélanger et homogénéiser,
une unité d'analyse optique se présentant sous la forme d'un spectromètre à diffraction laser (5) pourvu d'une cuve (51),
une conduite de circulation (41) pourvue d'une pompe tubulaire (4) pour la circulation de la suspension de mesure entre le récipient (31) et la cuve (51) du spectromètre (5),
caractérisé en ce que le dispositif comprend également un échantillonneur (1) formé d'une barre (11) qui est apte à être introduite à travers la paroi tubulaire d'un tube (7) amenant le courant de produit, et à être ramenée, et qui pivote sur son axe longitudinal, étant précisé que la barre (11) contient un espace de réception (41) pour l'échantillon à prélever, que la barre (11) est entourée par un tube extérieur pivotant (15) appliqué de façon étanche, qui a au moins une ouverture (16) de l taille de l'espace de réception (14), et que le tube extérieur (15) obture tout d'abord l'espace de réception (14) tandis que la barre (11) est poussée dans le tube (7), après quoi l'ouverture (16) est finalement tournée de telle sorte que l'échantillon puisse remplir l'espace de réception (14), puis la barre (11) est ramenée dans une position d'évacuation vers un récipient de rinçage (22) contenant un espace de réception obturé par le tube extérieur (15) et cet espace de réception vient coïncider à cet endroit avec une ouverture (16a) du tube extérieur (15),
en ce qu'il est prévu des moteurs pour introduire, ramener et faire pivoter la barre (11) et pour faire pivoter le tube extérieur (15),
en ce que le récipient de rinçage (22) est relié au récipient (31) prévu pour la suspension de mesure,
en ce qu'il est prévu des buses de lavage (23) pour chasser l'échantillon de l'espace de réception (14) vers le récipient de rinçage (22),
et en ce qu'il est prévu un ordinateur pour commander les mouvements de l'échantillonneur (11) et l'évacuation de l'espace de réception (14) et pour évaluer, mettre en mémoire et imprimer les valeurs de mesure.
